# EUROPEAN PATENT SPECIFICATION

(11) **EP 4 092 194 B1**
(45) Date of publication and mention of the grant of the patent: **10.09.2025**
(21) Application number: 21757424.3
(22) Date of filing: 19.01.2021
(51) Int. Cl.: E02D 3/00, E02D 17/20, E02D 29/02, B29C 65/48, B29C 70/22

(54) **DURABILITY-ENHANCED FIBER REINFORCED POLYMER STRIP AND LATTICE-SHAPED GEOGRID USING SAME**
STREIFEN AUS FASERVERSTÄRKTEM POLYMER MIT ERHÖHTER HALTBARKEIT UND GITTERFÖRMIGES GEOGITTER UNTER VERWENDUNG DESSELBEN
BANDE POLYMÈRE RENFORCÉE PAR DES FIBRES À DURABILITÉ AMÉLIORÉE ET GÉOGRILLE EN FORME DE TREILLIS L'UTILISANT

(30) Priority: 17.02.2020 KR 20200019162
(43) Date of publication of application: 23.11.2022
(73) Proprietor: Huvis Corporation, Seoul 06060 (KR)
(72) Inventor: YOON, Kwang Jung, Sejong-si 30100 (KR); KWON, Oh Hyuk, Daejeon 34083 (KR); SUNWOO, Ye Rim, Daejeon 34008 (KR)
(74) Representative: Danubia Patent & Law Office LLC
(86) International application number: PCT/KR2021/000741
(87) International publication number: WO 2021/167253

(56) References cited:
- EP-A1- 3 603 970
- WO-A1-00/21742
- WO-A1-2019/194193
- JP-A- H0 510 356
- KR-A- 20100 065 824
- KR-A- 20190 129 545
- KR-B1- 100 608 441
- KR-B1- 101 186 506
- KR-B1- 101 781 938
- KR-B1- 101 879 347
- US-A1- 2002 055 313

## Description

### [Technical Field]

The present invention relates to a durability-enhanced fiber reinforced polymer strip and a lattice-shaped geogrid made by the same, wherein a polyester-based adhesive powder is applied around a reinforcing fiber upon manufacture of the fiber reinforced polymer strip to strength the adhesiveness with a polymer resin coated on the reinforcing fiber and improve self-durability, and the lattice-shaped geogrid using the same improves the contact strength.

### [Background Art]

The present invention relates to a durability-enhanced fiber reinforced polymer strip and a geogrid using said strip, mainly used as a reinforcing material for civil engineering.

The geogrid has been used for retaining wall reinforcement, slope reinforcement, ground reinforcement, etc. in civil engineering works, but in addition to high tensile force, low tensile strain and creep strain properties, physical properties such as construction resistance, friction characteristic and shape stability are required. The geogrid is divided into a plastic geogrid and a textile geogrid according to a manufacturing method and a material.

The plastic geogrid is manufactured by passing a polymer sheet extruded through an extruder through a roller, punching holes at regular intervals, and then stretching it uniaxially or biaxially (see GB 19890020843). In addition, the plastic geogrid is manufactured by extruding and stretching a polymer resin into a strip shape, forming a warp-directional strip and a weft-directional strip into a planar grid shape, and then adhering the strips using laser or frictional heat (see GB 2266540). However, since the plastic geogrid greatly undergoes creep strain when a load is applied for a long time due to the properties of the material, there is a problem that the stability of a reinforcing structure may be deteriorated.

The textile geogrid is manufactured by weaving a grid-type fabric using high-strength fibers and then coating the fabric with polyvinyl chloride, bitumen, acrylic, latex, rubber-based resin, and the like. The textile geogrid uses high-strength fibers to have excellent tensile strength and creep properties, but there is a high possibility that the geogrid will be damaged depending on the condition of the soil during construction, so that the construction resistance is lowered, and the manufacturing process is complicated, which is not economically preferable.

Meanwhile, in WO 99/28563, there is disclosed a manufacturing method of a geogrid by using a fiber reinforced polymer strip as a warp-directional strip and a thermoplastic polymer resin strip as a weft-directional strip to adhere the strips in a lattice form. In the aforementioned patents, there is disclosed the geogrid in which while the warp-directional fiber reinforced polymer strip is moving, the thermoplastic polymer resin is extruded and inserted to form and adhere the weft-directional strip and insert the fiber reinforced polymer strip into the weft-directional strip. However, when the fiber reinforced polymer strip is adhered by the method, the reinforcing fiber in the polymer is damaged and then the physical properties are deteriorated, and neither the warp-directional polymer strip nor the weft-directional polymer strip are in a molten state, and as a result, complete adhesion between the strips is not achieved. In addition, since the geogrid of the aforementioned patents has a planar structure, there is a problem in that friction characteristics and shape stability against vertical load are poor.

Further, in conventional methods of manufacturing a fiber reinforced polymer strip of a geogrid, when a thermoplastic polymer resin as a coating material in a molten state is supplied to an aggregate of a plurality of fibers which is an internal reinforcing material, the adhesiveness may be lowered according to a type of reinforcing material to cause a problem in the contact strength of the lattice-shaped geogrid.

US 2002/0055313 A1 relates to a non-heat cleaned glass fiber fabric which is made of mutually normal fiber strands, and in the strands, there is a plurality of fibers. In an embodiment around each fiber a first coating is provided around which there is a second type of coating whereon a tertiary powdered coating made of solid particles is provided. These coatings were used for increasing tensile strength of the fabric. In fabrics of such types, the strands extending in warp and weft directions intersect each other but they are not additionally fused or coupled to each other, and the structure of the densely woven strands provides for the mechanical stability. The size of the strands lies in the range between 3 and 35 µm. In case of geogrids the strips have a much higher cross-section, and they are arranged spaced from each other, therefore the mutually crossing stripes must be interconnected to ensure mechanical stability. The outer layer of the cited publication cannot provide fusion between the strips at the crossing points and not only owing to the much smaller size but also because of the different properties of the powdered outer layer they cannot be used as strips for geogrids.

### [Technical Problem]

Therefore, the present invention has been made in an effort to provide a fiber reinforced polymer strip of a geogrid with improved adhesiveness between a reinforcing material and a coating material.

The present invention has also been made in an effort to provide a geogrid exhibiting high tensile strength and low tensile strain and creep strain properties as well as excellent construction resistance, friction properties and shape stability.

### [Technical Solution]

This technical problem has been solved by providing a durability-enhanced fiber reinforced polymer strip made as defined in the attached claims. From such strips a lattice-shaped geogrid can be made as defined in the claims directed to the geogrid.

### [Description of Drawings]

The accompanying drawings of this specification exemplify a preferred embodiment of the present invention, it will be understood that the present invention is not limited to only contents illustrated in the accompanying drawings.
FIG. 1 is a plan view showing a geogrid according to a preferred embodiment of the present invention.
FIG. 2 is a partially enlarged perspective view illustrating a part of the geogrid according to a preferred embodiment of the present invention.
FIG. 3 is a view schematically illustrating a configuration of a manufacturing apparatus of a fiber reinforced polymer strip for illustration only.
FIG. 4 is a view schematically illustrating a configuration of an extrusion unit of the manufacturing apparatus of the fiber reinforced polymer strip for illustration.
FIGS. 5A and 5B are a plan view and a side view illustrating a schematic configuration of a geogrid manufacturing apparatus.
FIG. 6 is a perspective view schematically illustrating a configuration of a strip arrangement means in the geogrid manufacturing apparatus for illustration.
FIGS. 7A to 7D are a side view and a plan view schematically illustrating a configuration of a fusion unit in the geogrid manufacturing apparatus, wherein FIGS. 7A and 7B illustrate a configuration of a first fusion machine, and FIGS. 7C and 7D illustrate a configuration of a second fusion machine, respectively.
FIGS. 8A to 8C are schematic side views illustrating a process of bending a fiber reinforced polymer strip in a strip arrangement means for illustration.
FIG. 9 is a flowchart illustrating a process of manufacturing a geogrid from a fiber reinforced polymer strip for illustration.
FIGS. 10A to 10D are views illustrating a configuration of a strip arrangement means and a shape of fiber reinforced polymer strips arranged by the strip arrangement means according to a preferred embodiment of the present invention.
FIGS. 11A to 11C are cross-sectional views illustrating examples of various shapes of a fiber reinforced polymer strip.

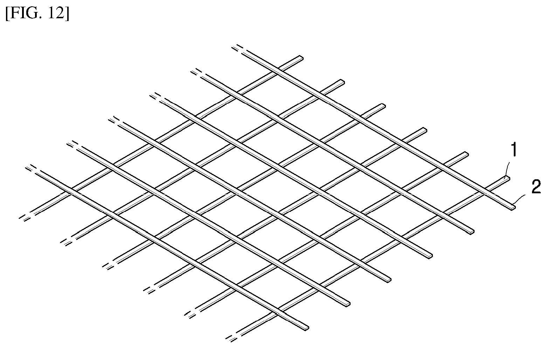

FIG. 12 is a view illustrating a conventional geogrid grid shape.

### [Best Mode for the Invention]

Hereinafter, preferred Examples of the present invention will be described in detail. In describing the present invention, a detailed description of known functions and configurations incorporated will be omitted so as to avoid obscuring the gist of the present invention.

The terms "about", "substantially", and the like used herein are used as a numerical value or a value close to the numerical value when inherent manufacturing and material tolerances are presented in the stated meaning, and used to prevent an unscrupulous infringer from unfairly using disclosed contents in which precise or absolute numerical values are mentioned to help in the understanding of the present invention.

The present invention relates to a durability-enhanced fiber reinforced polymer strip configured by an aggregate of a plurality of fibers as a reinforcing material, a thermoplastic polymer resin as a coating material, and an adhesive using an adhesive powder on the reinforcing material surface.

The adhesive powder (hot-melt adhesive) is a non-polluting, heat-melting adhesive that is solidified and adhered when cooled after applied and adhered to the surface of an adherend in a heat-molten state without using any water or solvent.

A general hot-melt adhesive powder is frequently used in automobile parts, etc., and serves to adhere a base material to a base material. The type of the hot-melt adhesive includes olefin-based, amide-based, and polyester-based types.

In the present invention, the adhesive powder is preferably polyester-based, and formed by powdering a low-melting copolymerized polyester resin in which dicarboxylic acid consisting of 60 to 90 mol% of terephthalic acid and 10 to 40 mol% of isophthalic acid and diol consisting of 60 to 100 mol% of ethylene glycol and 0 to 40 mol% of diethylene glycol are copolymerized. In addition, the adhesive powder has a glass transition temperature (Tg) of 50°C or more, the hardness (Shore D) of 80 or more, and a softening point of 80 to 140°C.

The low-melting copolymerized polyester resin copolymerizes dicarboxylic acid and diol, wherein the dicarboxylic acid may consist of 60 to 90 mol% of terephthalic acid and 10 to 40 mol% of isophthalic acid, and the diol may consist of 60 to 100 mol% of ethylene glycol and 0 to 40 mol% of diethylene glycol.

As the terephthalic acid, ester-forming derivatives thereof or a mixture thereof may be used, and as the isophthalic acid, ester-forming derivatives thereof or a mixture thereof may also be used.

In addition, in the polymerization process, an antimony-based catalyst to the weight of the final polymer is added in 100 to 500 ppm based on metal antimony, and the polymerization process is preferably performed at a melt polymerization temperature in the range of 255 to 285°C. The antimony catalyst includes antimony trioxide (ATO) or antimony triglycolate (ATG), and the polymerization process may be performed by adding a known polyester polycondensation catalyst. In addition to the above-mentioned raw materials, various additives such as an oxidation stabilizer, a matting agent, and a coloring inhibitor may be added.

The low-melting copolymer polyester-based resin prepared by the above method is coagulated and then solidified at room temperature. Thereafter, the solidified low-melting copolymer polyester-based resin is pulverized at room temperature with a pulverizer to make a powder.

The adhesive polyester-based adhesive powder of the present invention preferably has a softening point of 80 to 140°C, a glass transition temperature (Tg) of 50°C or more, a hardness (Shore D) of 80 or more, a melt flow index of 5 to 40 g/10 min (in a condition of 190°C, 2.16 kg) and a particle size of 50 to 1,500 µm.

Here, when the melt flow index is less than 5 g/10 min, it is difficult to expect high adhesiveness because the flow of the adhesive powder is not smooth in the hot melting process, and when the melt flow index exceeds 40 g/10 min, the molten adhesive powder overflows into a nonwoven fabric, and thus the adhesiveness may be relatively lowered.

The adhesive powder has the softening point of 80 to 140°C, and storage stability at a high temperature is deteriorated below 80°C, and as the adhesion temperature and the process temperature increase at 140°C or more, process cost increase and substrate damage may occur. When the glass transition temperature (Tg) is 50°C or less, the high-temperature storage stability is very poor, and the fusion of the powder may occur during conveying during export in summer. When the hardness (Shore D) is 80 or less, there is a problem in that the formability is deteriorated.

In addition, the hot-melt adhesive powder capable of pulverizing at room temperature of the present invention preferably has a particle size of 50 to 1,500 µm. When the particle size is less than 50 µm, the amount to be absorbed in the fiber aggregate as the reinforcing material increases when the adhesive powder is dispersed, and thus the used amount of the adhesive powder increases. When the particle size exceeds 1,500 µm, it is difficult to uniformly disperse the adhesive powder, and it is difficult to expect high adhesiveness because melting by heating is not smooth.

A geogrid using a fiber reinforced polymer strip reinforced with fibers inside the polymer resin exhibits high tensile strength and low tensile strain and creep strain properties, and improves construction resistance. Considering the tensile strength, contact strength, and manufacturing processability of the geogrid, when the cross section of the fiber reinforced polymer strip is formed in a quadrangular shape, the width and the thickness thereof are preferably adjusted to 2 to 30 mm and 1 to 10 mm, more preferably 3 to 20 mm and 1.5 to 5 mm, respectively. When the cross section of the fiber reinforced polymer strip is formed in a circular shape, the diameter is preferably adjusted to 2 to 20 mm, more preferably 4 to 15 mm.

As the thermoplastic polymer resin 110 constituting fiber reinforced polymer strips 1 and 2, a thermoplastic resin is employed to sufficiently protect the reinforcing fiber 100 from the outside and be thermally fused to each other. For example, the thermoplastic polymer resin 110 may use polyolefin-based resins having a melt index (MI) of 1 to 35, and resins having an intrinsic viscosity (IV) of 0.64 to 1.0 such as polyethylene terephthalate, polyamides, polyacrylates, polyacrylonitrile, polycarbonates, polyvinylechloride, polystyrene, and polybutadiene alone or in combination thereof. In addition, as the reinforcing fibers 100 constituting the fiber reinforced polymer strips 1 and 2, all high-strength fibers having high tensile strength and low tensile strain and creep strain properties may be used. For example, the reinforcing fibers 100 may use polyester fiber, glass fiber, aramid fiber, carbon fiber, basalt fiber, stainless steel fiber, copper fiber, and amorphous metal fiber alone or in combination of one or more thereof. In order to sufficiently protect the reinforcing fiber by the thermoplastic polymer resin while sufficiently exhibiting the function of the reinforcing fiber, the total cross-sectional area of fibers constituting a warp-directional fiber reinforced polymer strip and a weft-directional fiber reinforced polymer strip is preferably maintained to 20 to 80% of the total cross-sectional area of the fiber reinforced polymer strips. When the total cross-sectional area of the reinforcing fiber is less than 20% of the total cross-sectional area of the fiber reinforced polymer strips, it is difficult to sufficiently exhibit the reinforcing function of the reinforcing fiber. When the total cross-sectional area thereof exceeds 80%, the thickness of the polymer layer is too thin, so that the focusing effect of the reinforcing fiber by the polymer is reduced, and the reinforcing fiber is not sufficiently protected, so that the construction resistance is deteriorated.

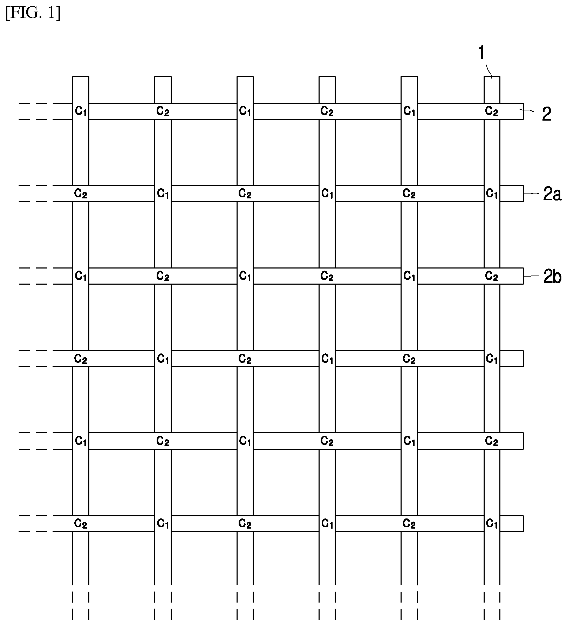

FIG. 1 is a plan view illustrating a geogrid according to a preferred embodiment of the present invention. Referring to FIG. 1, the geogrid of the present invention has a lattice shape formed by a plurality of warp-directional fiber reinforced polymer strips 1 arranged in parallel in a warp direction at predetermined intervals and a plurality of weft-directional fiber reinforced polymer strips 2 arranged in parallel in a weft direction at predetermined intervals.

It will be understood to those skilled in the art that the 'warp direction' and 'weft direction' as used in the present specification and claims refer to a first direction and a second direction that intersect each other, respectively. However, according to the present invention, the warp direction and the weft direction are not limited to intersect each other at a right angle, and as described below, the angle thereof may be properly set within a range in which the geogrid may distribute the load and exert a sufficient pulling force. In addition, although the intersection for the weft direction has been described with respect to the warp direction in the present specification, it should be construed that the intersection is a relative concept and equally applicable even to the weft direction.

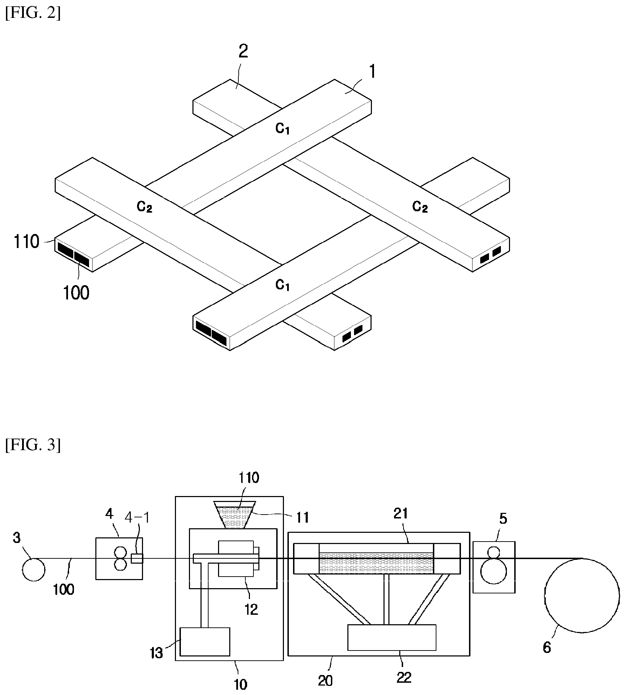

According to the present invention, the warp-directional fiber reinforced polymer strips 1 and the weft-directional fiber reinforced polymer strips 2 alternately intersect each other up and down. Specifically, referring to FIG. 1 and FIG. 2 which is a partially enlarged perspective view thereof, the warp-directional fiber reinforced polymer strips 1 intersect any one 2a of the weft-directional fiber reinforced polymer strips 2 on the upper surface thereof to form first contact points C₁. Simultaneously, the warp-directional fiber reinforced polymer strips 1 intersect another adjacent weft-directional fiber reinforced polymer strip 2b on the lower surface thereof to form second contact points C₂. In the same manner, when all the warp-directional fiber reinforced polymer strips 1 intersect the weft-directional fiber reinforced polymer strip 2 so that the first contact points C₁ and the second contact points C₂ are alternated with each other, as illustrated in the embodiment of FIG. 1, a geogrid having a so-called 'textile weave structure' in which the first contact points C₁ and the second contact points C₂ are alternately positioned is formed. According to the present inventors, in this case, the physical properties of the geogrid are maximized.

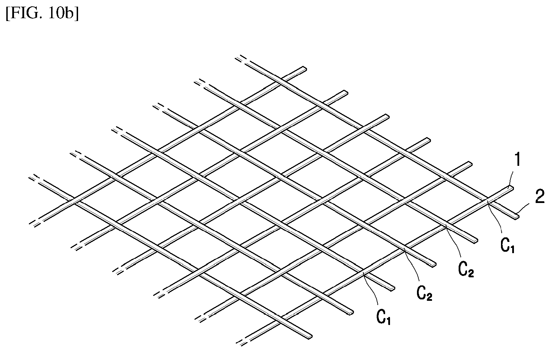

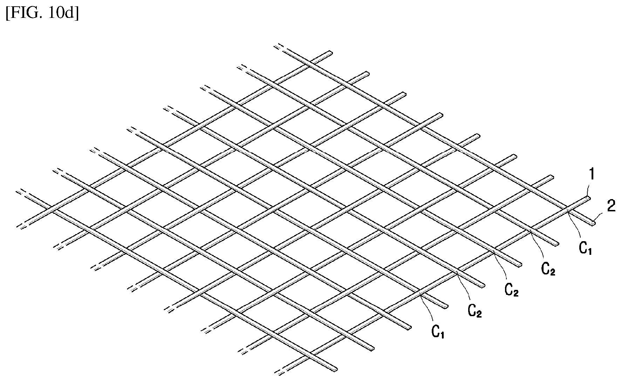

According to another embodiment of the present invention, the warp-directional fiber reinforced polymer strips 1 may intersect the weft-directional fiber reinforced polymer strips 2 so as to include two or more consecutive first contact points C₁ or second contact points C₂, and this embodiment is illustrated in FIGS. 10B and 10D. That is, in the geogrid illustrated in the embodiment of these drawings, the warp-directional fiber reinforced polymer strips 1 intersect the weft-directional fiber reinforced polymer strips 2 to have two consecutive second contact points C₂ or three consecutive second contact points C₂ between the first contact points C₁.

As such, the geogrid formed by intersecting the warp-directional fiber reinforced polymer strips 1 with the weft-directional polymer strips 2 increases the frictional force with the material to be reinforced such as soil and resistance to vertical load, thereby greatly improving the shape stability and construction resistance. The intersecting angles between the plurality of warp-directional fiber reinforced polymer strips and weft-directional fiber reinforced polymer strips are preferably 80° to 100°. However, when the intersecting angle is smaller than 80° or larger than 100°, the dispersing force and pulling force against the vertical load are greatly reduced, and thus, the strips may not be used as a reinforcing material for civil engineering. The intersecting angle is most preferably 90°.

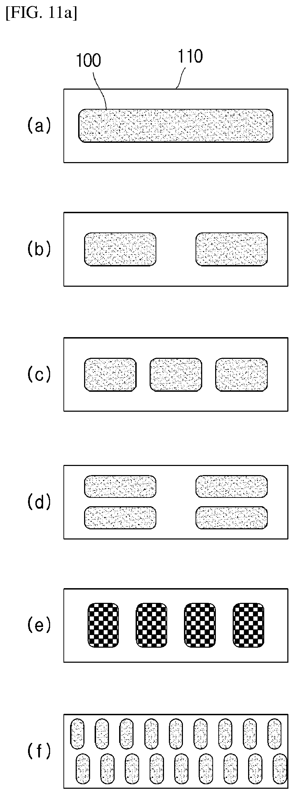

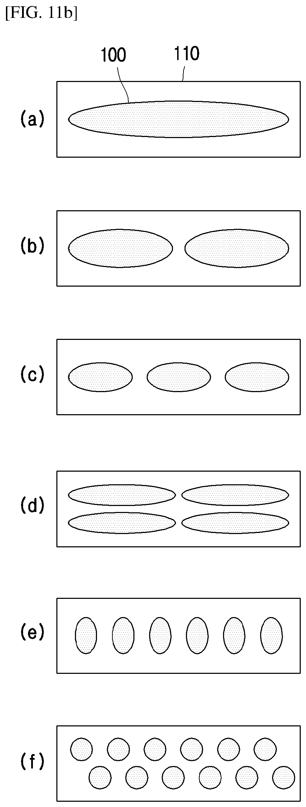

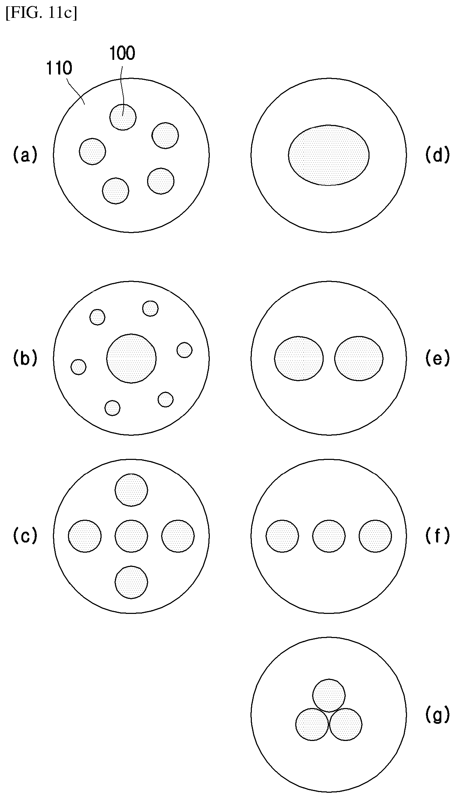

The warp-directional and weft-directional fiber reinforced polymer strips 1 and 2 have a structure in which the reinforcing fiber is inserted into the thermoplastic polymer resin, respectively, and in FIGS. 11A to 11C, cross-sectional views of various fiber reinforced polymer strips are illustrated. The shapes may be variously obtained by changing a form in which a plurality of fibers are aggregated or dispersed and an extrusion die shape of the thermoplastic polymer resin. For example, the inside of the thermoplastic polymer resin 110 extruded to have a quadrangular cross section is reinforced with the reinforcing fiber 100 in which a plurality of fibers are aggregated in a quadrangular, oval, or circular shape, etc. to form the fiber reinforced polymer strips 1 and 2 (FIGS. 11A and 11B). Alternatively, the inside of the thermoplastic polymer resin 110 extruded to have a circular cross section is reinforced with the reinforcing fiber 100 in which fibers are aggregated in a circle or oval shape to form the fiber reinforced polymer strips 1 and 2 (FIG. 11C). In addition, it is possible to manufacture fiber reinforced polymer strips having various cross-sectional shapes by various combinations.

The thermoplastic polymer resins are fused to each other in the contact points C₁ and C₂ at which the warp-directional fiber reinforced polymer strips 1 and the weft-directional fiber reinforced polymer strips 2 intersect. Accordingly, since the warp-directional fiber reinforced polymer strips and the weft-directional polymer strips intersected up and down are fixed to each other, the shape stability of the geogrid against the vertical load is maintained to improve the construction resistance.

In the geogrid of the present invention having the above-described structure, a plurality of warp-directional fiber-reinforced polymer strips arranged in parallel are disposed preferably at intervals of 10 to 100 mm, more preferably 20 to 80 mm with respect to a central line of each warp-directional fiber reinforced polymer strip. A plurality of weft-directional fiber-reinforced polymer strips arranged in parallel are also disposed preferably at intervals of 10 to 100 mm, more preferably 20 to 80 mm with respect to a central line of each weft-directional fiber reinforced polymer strip.

When the intervals of the fiber reinforced polymer strips are maintained in the above range, the soil is not separated but integrated, so that the function as the reinforcing material may be smoothly exhibited. That is, when the interval between the fiber reinforced polymer strips is too large, the load received to the structure cannot be evenly distributed, so that the reinforcing function is weakened. When the interval between the fiber reinforced polymer strips is too small, upper and lower layers are separated so that the reinforcing function is not properly exhibited.

The geogrid according to the present invention is manufactured by the geogrid manufacturing apparatus by first manufacturing fiber reinforced strips by the manufacturing apparatus of the fiber reinforced strip and using the manufactured fiber reinforced strips. Hereinafter, the process will be described for each step.

### Manufacture of fiber reinforced strips

A schematic configuration of the manufacturing apparatus of the fiber reinforced strip is illustrated in FIG. 3 for each function. Referring to FIG. 3, the manufacturing apparatus of the fiber reinforced strip includes an extrusion unit 10 that melts and extrudes the polymer resin 110 supplied through a hopper 11 so that the reinforcing fiber 100 is embedded therein and a cooling unit 20 that cools the extruded resin.

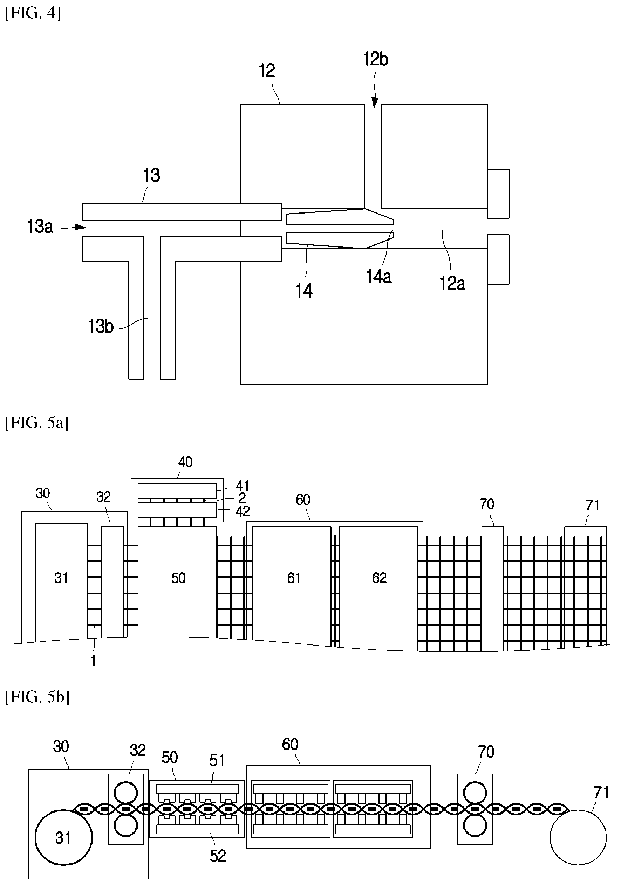

As shown in a detailed view of FIG. 4, the extrusion unit 10 includes a cross head die 12 that forms fiber reinforced polymer strips by supplying and coating the polymer resin 110 around the supplied reinforcing fiber 100, a guide holder 13 that provides a vacuum state to remove air from the fiber 100 while providing a passage for supplying the reinforcing fiber 100 to the cross head die 12, and a nipple 14 that sets the position of the supplied reinforcing fiber 100 and prevents the reverse flow thereof.

An extrusion passage 12a is formed in the cross head die 12 in a supply direction of the reinforcing fiber 100, and a resin supply passage 12b through which the polymer resin 110 stored in the hopper 11 is supplied communicates with the extrusion passage 12a.

A fiber supply passage 13a through which the reinforcing fiber 100 is supplied is formed in the guide holder 13, and the guide holder 13 is coupled to the cross head die 12 so that the fiber supply passage 13a is connected to the extrusion passage 12a. In addition, in order to make a vacuum around the reinforcing fiber 100 supplied through the fiber supply passage 13a, a vacuum pipe 13b connected to a pumping means 13 (FIG. 3) is connected with the fiber supply passage 13a.

A nipple hole 14a is formed in the center of the nipple 14 in a longitudinal direction, and the nipple 14 is installed so that the nipple hole 14a is connected with the fiber supply passage 13a. An end of the nipple 14 extends to the vicinity of a point where the resin supply passage 12b is connected in the extrusion passage 12a of the cross head die 12. Therefore, as described below, the reinforcing fiber 100 emitted through the nipple hole 14a is surrounded and coated by the polymer resin 110 supplied through the resin supply passage 12b in a molten state.

The cooling unit 20 includes, for example, a cooling tank 21 containing a refrigerant such as water, and a constant temperature control means 22 for maintaining a constant temperature of the refrigerant. The strips extruded from the extrusion unit 10 are cooled by water while proceeding along the cooling tank 21, and the length of the cooling tank 21 may be appropriately adjusted according to an operation.

In FIG. 3, reference numeral 3 denotes a creel on which the reinforcing fiber 100 is placed, reference numeral 4 denotes a feeder for supplying the reinforcing fiber 100 to the extrusion unit 10, and reference numeral 4-1 denotes an adhesive powder supplier.

Reference numeral 5 denotes a winding means for pulling the extruded and manufactured fiber reinforced strips at a constant speed, and reference numeral 6 denotes a winder for winding the strips to a predetermined length.

When describing an operation of the strip manufacturing apparatus for illustration purposes having the configuration as described above, first, the reinforcing fiber 100 placed on the creel 3 is supplied to the extrusion unit 10 by the feeder 4. Preferably, a constant tension is maintained in the reinforcing fiber 100 by making a supply speed of the reinforcing fiber by the feeder 4 and a winding speed of the strip by the winding means 5 the same. This prevents heat shrinkage generated when the reinforcing fiber 100 passes through the cross head die 12, so that the geogrid may function as a reinforcing material for civil engineering.

In addition, the adhesive powder supplier 4-1 is a component of the feeder 4, and before being supplied to the extrusion unit 10, the polyester-based adhesive powder is dispersed to the surface of the reinforcing fiber 100 at room temperature. The reinforcing fiber 100 is an aggregate of fibers and is dispersed in all directions of up, down, front and rear in a state in which the surface area is maximally increased while a constant tension is maintained. At this time, the polyester-based adhesive powder adheres to the surface of the reinforcing fiber 100.

The reinforcing fiber 100 supplied to the extrusion unit 10 passes through the fiber supply passage 13a of the guide holder 13 to enter into the nipple hole 14a of the nipple 14 connected thereto. Then, the fiber 100 discharged through the nipple hole 14a passes through the extrusion passage 12a of the cross head die 12.

At this time, the inside of the fiber supply passage 13a of the guide holder 13 is maintained in a vacuum state by the operation of a vacuum pump in the pumping means 13 (FIG. 3), which prevents bubbles from being captured when the reinforcing fiber is in contact with the molten resin. If the bubbles are not removed, the bubbles are expanded inside the compressed strip or burst on the surface, resulting in poor appearance of the strip and deterioration of its physical properties. In addition, while the bubbles expand, a polymer resin layer in a portion thereof becomes thinner, and there is a risk that the reinforcing fiber may be damaged even by a light external impact during construction.

The reinforcing fiber 100 passing through the nipple 14 is surrounded by the molten polymer resin supplied through the resin supply passage 12b to be discharged from the cross head die 12.

While the polyester-based adhesive powder dispersed on the surface of the reinforcing fiber 100 is molten by the heat of the molten polymer resin, adhesion with the polymer resin as the coating material is increased. When there is the polyester-based powder on the surface of the reinforcing material rather than when the molten polymer resin is in direct contact with the surface of the reinforcing material, the adhesiveness of the powder is stronger, so that the bonding strength of the reinforcing material and the coating material may be increased.

The nipple 14 prevents the polymer resin 110 from flowing back toward the guide holder 13. In addition, by variously changing the cross-sectional shape of the nipple hole 14a, products having reinforcing fibers having various shapes illustrate in FIGS. 11A to 11C may be obtained.

In addition, the outer shape of the strip may be changed by changing the cross-sectional shape of the end of the extrusion passage 12a of the cross head die 12.

The fiber reinforced polymer strip discharged from the cross head die 12 is cooled by water in the cooling tank 21 of the cooling unit 20. The cooled fiber reinforced strip is wound on the winder 6 at a predetermined length through the winding means 5.

The fiber reinforced polymer strip is manufactured to have a rectangular cross-sectional shape having a width of 2 to 30 mm, preferably 3 to 20 mm and a thickness of 1 to 10 mm, preferably 1.5 to 5 mm, or a circular cross-section with a diameter of 2 to 20 mm, preferably 4 to 15 mm. If the width or diameter of the strip is smaller than 2 mm, it is difficult to manufacture a product with a minimum tension of 2 ton/m, and the contact adhesion is low, and when the width of the strip is greater than 30 mm or the diameter is greater than 20 mm, it is difficult to arrange the strips in a strip arrangement device to be described below or to wind the manufactured product on a roll to a certain length.

### Manufacture of geogrid

Next, a process for manufacturing the geogrid according to the present invention using the manufactured fiber reinforced polymer strip will be described. According to a manufacturing method to be described below, the geogrid may be inexpensively mass-produced.

The fiber reinforced polymer strips 1 and 2 are arranged in the warp direction and the weft direction, respectively, and a lattice structure is variously formed by changing the arrangement form of the strips, so that it is possible to better exhibit the reinforcing properties of the product.

FIGS. 5A and 5B illustrate a schematic configuration of a geogrid manufacturing apparatus for illustration. Referring to the drawings, the geogrid manufacturing apparatus of the present invention includes a warp-directional strip supply unit 30, a weft-directional strip supply unit 40, a strip arrangement means 50, a fusion unit 60, a winding means 70, and a winder 71.

The warp-directional strip supply unit 30 includes a warp-directional creel 31, and a warp-directional feeder 32 for supplying the strips to the strip arrangement means 50 from the creel 31. For example, the feeder 32 may consist of a pair of rollers so that the polymer strip is interlocked therebetween to be supplied. The warp-directional fiber reinforced polymer strip 1 is mounted on the warp-directional creel 31, and a plurality of strips is supplied in parallel to the strip arrangement means 50 by the operation of the warp-directional feeder 32.

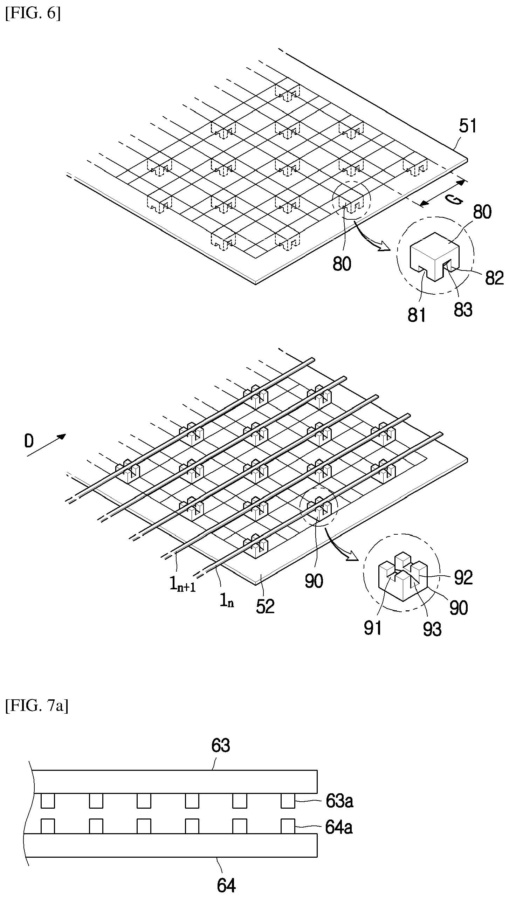

The strip arrangement means 50 weaves the geogrid by alternating warp-directional and weft-directional strips 1 and 2 to each other, and as illustrated in FIG. 6, includes a pair of upper plate 51 and lower plate 52 facing each other. At least one of the upper plate 51 and the lower plate 52 performs a mutual elevating motion by a driving means (not illustrated).

On mutually opposite surfaces of the upper plate 51 and the lower plate 52, for example, a first bending member 80 and a second bending member 90 are provided to press and bend the supplied warp-directional fiber reinforced polymer strips 1, respectively. Virtual lattices are indicated on the upper plate 51 and the lower plate 52 illustrated in FIG. 6, and a gap G between the lattices is the same as a gradation lattice of the manufactured geogrid. As will be described below, each intersection of the lattices corresponds to an intersection of the geogrid to be manufactured.

The bending members 80 and 90 are installed at the intersections of the virtual lattice, and at this time, and the first bending members 80 and the second bending members 90 are alternately disposed so as to intersect each other without facing each other, and the installation positions of the bending members are set according to the positions and numbers of the first contact points C₁ and the second contact points C₂ of the manufactured geogrid. In the embodiment, in the case of a so-called 'textile weave structure' in which warp-directional and weft-directional fiber reinforced polymer strips 1 and 2 are regularly alternated up and down as illustrated in FIG. 1, the first bending members 80 and the second bending members 90 are also alternately disposed at every other intersection of the lattice regularly.

In the first and second bending members 80 and 90, support grooves 81 and 91 are formed in a warp direction, and through grooves 82 and 92 are formed in a weft direction. The support grooves 81 and 91 come into contact with the warp-directional fiber reinforced polymer strip 1 supplied between the upper plate 51 and the lower plate 52 so as not to be separated when pressing, as will be described below, and the widths of the support grooves 81 and 91 are formed to be larger than the width of the polymer strip 1.

The through grooves 82 and 92 correspond to mountains and valleys of the warp-directional fiber reinforced polymer strip 1 bent by the first and second bending members 80 and 90 and provide a passage through which the weft-directional fiber-reinforced polymer strip 2 passes when the weft-directional fiber-reinforced polymer strip 2 is inserted. Accordingly, the widths of the through grooves 82 and 92 are also formed to be larger than the width of the weft-directional fiber reinforced polymer strip 2.

The through grooves 82 and 92 have depths greater than depths of the support grooves 81 and 91 to facilitate the passage of the weft-directional fiber reinforced polymer strip 2, and preferably, inclined surfaces 83 and 93 may be formed respectively so as to induce the end of the weft-directional polymer strip 2 to be inserted.

The weft-directional strip supply unit 40 includes a weft-directional creel 41, and a weft-directional feeder 42 for supplying the strips to the strip arrangement means 50 from the creel 41. These structures of the creel 41 and the feeder 42 are the same as those of the warp-directional strip supply unit 30.

The fusion unit 60 is a device for adhering contact points of the strips arranged in the strip arrangement means 50 to each other, and preferably consists of first and second fusion machines 61 and 62. The strips adhere to each other by vibration so as to exert maximum strength without damaging the reinforcing fiber present in the polymer resin.

The configuration of the first fusion machine 61 is illustrated in FIG. 7A. As illustrated in FIG. 7A, the fusion machine 61 includes an upper jig 63 and a lower jig 64 which face each other, and are supplied with an array of the warp-directional and weft-directional fiber reinforced polymer strips 1 and 2 therebetween. A plurality of pairs of first support holders 63a and 64a facing each other are formed on opposite surfaces of the upper jig 63 and the lower jig 64.

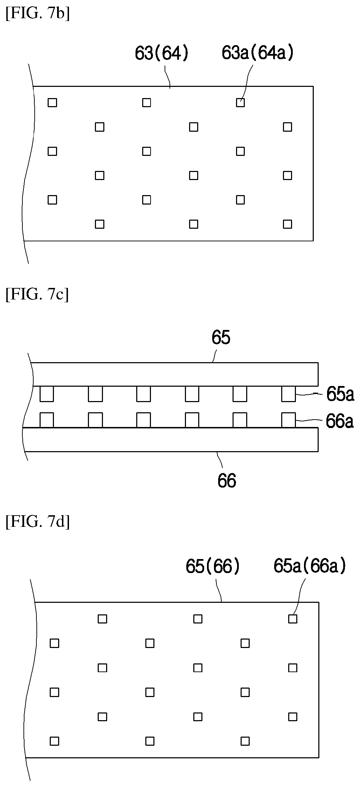

Similarly, the configuration of the second fusion machine 62 also consists of an upper jig 65 and a lower jig 66, as illustrated in FIG. 7C, and includes a plurality of second support holders 65a and 66a protruding so as to face each other on the opposite surfaces of the upper jig 65 and the lower jig 66.

The positions of the first support holders 63a and 64a and the second support holders 65a and 66a correspond to the mutual contact point positions of the warp-directional and weft-directional polymer strips 1 and 2 arranged in the strip arrangement means 50. For example, as illustrated in FIGS. 7B and 7D, respectively, the first support holders 63a and 64a correspond to the positions of the first contact points C₁ (FIG. 1) and fuse these contact points to each other, and the second support holders 65a and 66a correspond to the positions of the second contact points C₂ to fuse these contact points to each other.

Preferably, the ends of the support holders are roughened so as not to slip when in contact with the polymer strip. It should be understood that such a configuration is not limited by the present embodiment, and a structure capable of pressing and supporting the polymer strip may be variously modified and implemented.

The fusion machine enables adhesion by melting the polymer resin 110 surrounding the reinforcing fiber 100 within a short time by the relative vibrating motion of the upper jig and the lower jig. For example, while the first support holders 63a and 64a of the first fusion machine 61 press and support the upper surface of the warp-directional polymer strip 1 and the lower surface of the weft-directional polymer strip 2 at the first contact point C₁ of the polymer strip array, respectively, when the upper jig 63 vibrates in a direction perpendicular to the warp direction while the lower jig 64 is fixed, the polymer resin at the first contact point C₁ is molten and adhered.

Similarly, while the second support holders 65a and 66a of the second fusion machine 62 press and support the upper surface of the weft-directional polymer strip 2 and the lower surface of the warp-directional polymer strip 1 at the second contact point C₂ of the polymer strip array, respectively, when the lower jig 66 vibrates in a direction perpendicular to the warp direction while the upper jig 65 is fixed, the polymer resin at the second contact point C₂ is molten and adhered.

Although the configuration of the fusion unit 60 is illustrated in specific drawings is not limited to this embodiment, and a means capable of melting and adhering the polymer strips by causing the mutual vibration between the warp-directional polymer strip and the weft-directional polymer strip intersecting each other is included in the technical spirit of the present illustration.

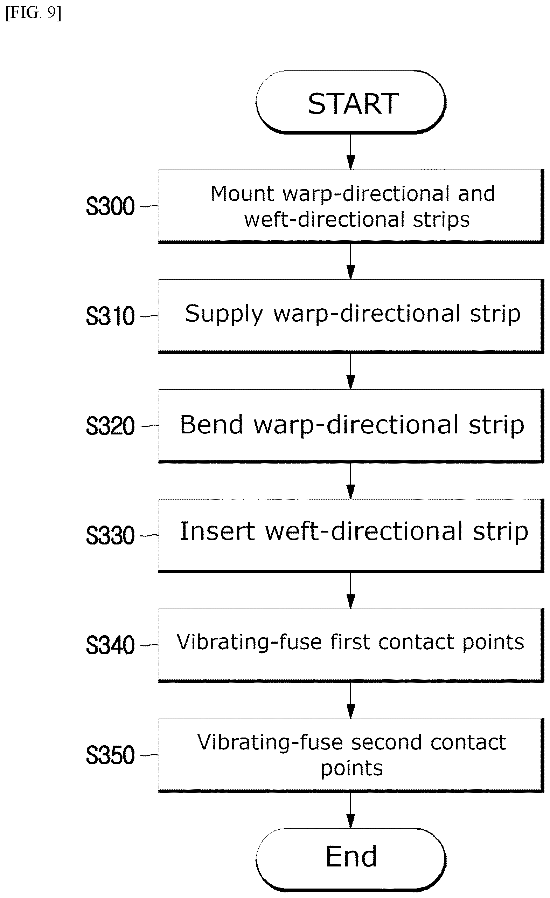

Then, a process of manufacturing a geogrid using the geogrid manufacturing apparatus having the above structure will be described with reference to FIG. 9.

First, the fiber reinforced polymer strips manufactured in the above strip manufacturing process are mounted in parallel to each other on the warp-direction creel 31 of the warp-directional strip supply unit 30 and the weft-directional creel 41 of the weft-directional strip supply unit 40, respectively (step S300).

At this time, the intervals of the fiber reinforced polymer strips 1 and 2 mounted on the creels 31 and 41 become 10 to 100 mm, preferably 20 to 80 mm, based on the center line thereof. For example, if the width of the final geogrid product is 1 to 5 m, the number of supplied strips is 10 to 500. When the interval between the strips is too large, 100 mm or more, the load received to the structure cannot be evenly distributed and thus the reinforcement function is weakened. On the contrary, when the interval between the strips is too small, 10 mm or less, the upper and lower layers of soil are separated and thus, the reinforcement function is not properly exhibited. When the intervals between the polymer strips are maintained within the above range, the soil is not separated but integrated to exhibit the function as a reinforcing material.

Subsequently, the warp-directional fiber reinforced polymer strips 1 are supplied in parallel into the strip arrangement means 50 from the warp-directional creel 31 by the warp-directional feeder 32 (step S310). At this time, the upper plate 51 and the lower plate 52 of the strip arrangement means 50 are kept spaced apart from each other, and accordingly, the warp direction polymer strips 1 enter along a straight line connecting the support grooves 81 and 91 of the first bending member 80 and the second bending member 90. Preferably, when the supply of the warp-directional fiber reinforced polymer strips 1 is completed, the warp-directional fiber reinforced polymer strips 1 are cut to appropriate lengths using a cutting means (not illustrated).

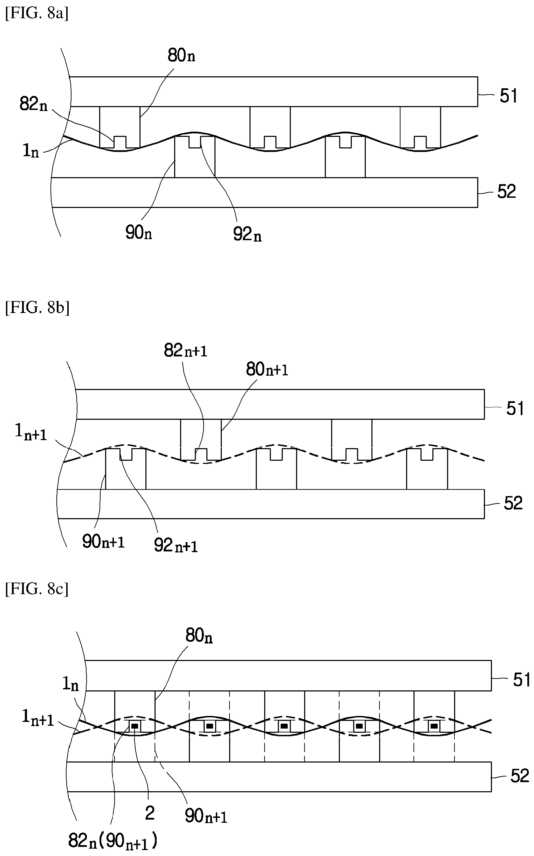

Next, in step S320, the warp-directional fiber reinforced polymer strips 1 are pressed and bent. At this time, bending states of an n-th warp-directional fiber reinforced polymer strip 1ₙ (shown by a solid line) (see FIG. 6) and an n+1-th warp-directional fiber reinforced polymer strip 1ₙ₊₁ (shown by a dotted line) are illustrated in FIGS. 8A and 8B, respectively.

Referring to FIG. 8A, when the upper plate 51 and the lower plate 52 approach each other to press the n-th warp-directional polymer strip 1ₙ, the ends of a first bending member 80ₙ and a second bending member 90ₙ are pressed in contact with the warp-directional polymer strip 1ₙ. At this time, preferably, the support grooves (see 81 and 91 in FIG. 6) are formed in the first and second bending members 80ₙ and 90ₙ, so that the strip is seated in the support groove even when pressed, thereby stably bending the polymer strip without separation. As a result of this bending, a valley is formed in a portion pressed by the first bending member 80ₙ, and a mountain is formed in a portion pressed by the second bending member 90ₙ.

On the other hand, when the warp direction polymer strip 1ₙ₊₁ positioned at the n+1-th is pressed, the n+1-th first and second bending members 80ₙ₊₁ and 90ₙ₊₁ are disposed alternately with the n-th bending members 80ₙ and 90ₙ, and thus, as illustrated in FIG. 8B, the shapes of the mountains and valleys are opposite to those of the n-th strip 1ₙ. That is, the valley is formed in a portion pressed by the first bending member 80ₙ₊₁, and the mountain is formed in a portion pressed by the second bending member 90ₙ₊₁.

Actually, since the pressing by the upper plate 51 and the lower plate 52 occurs at the same time, each of the bending states is consequently formed in an opposite manner by alternating the mountains and the valleys as illustrated in FIG. 8C.

As such, while the bending of the warp-directional polymer strip 1 is made, the weft-directional fiber reinforced polymer strip 2 is supplied by the weft-directional strip supply unit 40 (step S330). Specifically, as illustrated in FIG. 8C, the weft-directional polymer strip 2 is inserted through the through grooves 82 and 92 of the first and second bending members 80 and 90 by the weft-directional feeder 42, as illustrated in FIG. 8C.

In other words, the weft-directional polymer strip 2 is inserted to a space between a valley of the n-th polymer strip 1ₙ pressed and formed by the n-th first bending member 80ₙ and a mountain of the n+1-th polymer strip 1ₙ₊₁ pressed and formed by the n+1-th second bending member 90ₙ₊₁. Alternatively, the weft-directional polymer strip 2 is inserted to a space between a mountain of the n-th polymer strip 1ₙ pressed and formed by the n-th second bending member 90ₙ and a valley of the n+1-th polymer strip 1ₙ₊₁ pressed and formed by the n+1-th first bending member 80ₙ₊₁. In the present embodiment, although the weft-directional fiber reinforced polymer strip 2 is inserted by the weft-directional strip supply unit 40 provided at one side of the strip arrangement means 50, the weft-directional strip supply unit 40 is provided at both sides of the strip arrangement means 50 and may also supply the weft-directional strips at the same time from both sides thereof.

When the upper plate 51 and the lower plate 52 are spaced apart from each other by a driving means (not illustrated) while the weft-directional polymer strip 2 is inserted and cut to an appropriate length as described above, the warp-directional polymer strips 1 and the weft-directional polymer strips 2 are 'weaved' in an intersected form to be alternated with each other up and down as illustrated in FIG. 1. At this time, the mountain portion of the warp-directional polymer strip 1 intersects the weft-directional polymer strip 2 to form the first contact point C₁, and the valley portion of the warp-directional polymer strip 1 intersects the weft-directional polymer strip 2 to form the second contact point C₂.

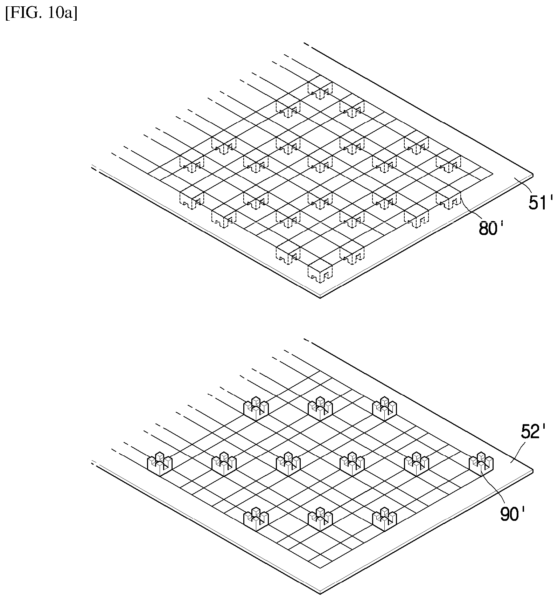

By changing the positions of the bending members 80 and 90 of the upper plate 51 and the lower plate 52, geogrids of various structures may be manufactured, and examples thereof are illustrated in FIGS. 10A to 10D.

As illustrated in FIG. 10A, when two consecutive first bending members 80' are formed to be positioned between second bending members 90' along the warp direction on the opposite surfaces of an upper plate 51' and a lower plate 52', the warp-directional and weft-directional polymer strips are arranged to have two second contact points C₂ between the first contact points C₁ as illustrated in FIG. 10B. In other words, this case may be shown as a case in which two warp-directional polymer strips are inserted into a valley (or mountain) of one warp-directional polymer strip.

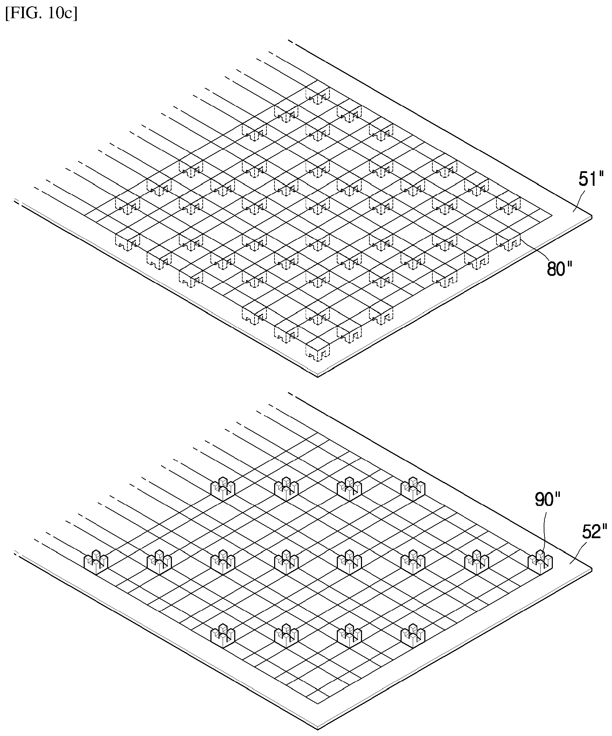

In addition, as illustrated in FIG. 10C, on the opposite surfaces of an upper plate 51" and a lower plate 52", when three consecutive first bending members 80" are disposed between second bending members 90", one warp-directional polymer strip 1 has three second contact points C₂ between the first contact points C₁ as illustrated in FIG. 10D. In other words, this case is a case in which three weft-directional polymer strips are inserted into a valley (or mountain) of one warp-directional polymer strip.

In the present embodiment, although the n-th warp-directional polymer strip and the n+1-th warp-directional polymer strip adjacent thereto have been described, any different warp-directional polymer strips which are not adjacent to each other are also equally applied.

The warp-directional and weft-directional polymer strips 1 and 2 arranged as described above are then transferred to the fusion unit 60 so that the contact points C₁ and C₂ are fused with each other. First, in the first fusion machine 61 illustrated in FIG. 7A, the upper jig 63 and the lower jig 64 approach each other to press the polymer strip array interposed therebetween. At this time, the first support holders 63a and 64a formed on the opposite surfaces of the upper and lower jigs 63 and 64 press and support the first contact points C₁ of the polymer strip array. More specifically, the support holder 63a of the upper jig 63 comes into contact with the upper surface of the warp-directional polymer strip 1, and the support holder 64a of the lower jig 64 comes into contact with the lower surface of the weft-directional polymer strip 2. At this time, since the ends of the support holders 63a and 64a are treated with rough surfaces to be in contact with the surface of the polymer strip without slipping.

In this state, while the lower jig 64 is fixed, when the upper jig 63 vibrates at a right angle to the longitudinal direction of the warp-directional polymer strip 1, for example, laterally, the polymer resin 110 of the strip is molten so that the first contact points C₁ adhere to each other (step S340). At this time, while the polymer resin is molten within a short time during vibration fusing, it is preferred that the reinforcing fiber 100 therein vibrates at a vibration frequency of 60 to 300 Hz and an amplitude of 0.3 to 1.8 mm so as not to be damaged.

As such, when the adhering of the first contact points C₁ is finished, the array of the warp-directional and weft-directional polymer strips is transferred to the second fusion machine 62 again to perform the vibration fusion for the second contact points C₂ (step S350).

In the second fusion machine 62, the second support holders 65a and 66a of the upper and lower jigs 65 and 66 come into contact with the second contact points C₂ of the array of the warp-directional and weft-directional polymer strips, that is, in the present embodiment, the support holder 65a comes into contact with the upper surface of the weft-directional polymer strip 2, and the support holder 66a comes into contact with the lower surface of the warp-directional polymer strip 1.

In this state, when the upper jig 65 is fixed and the lower jig 66 vibrates at a right angle to the longitudinal direction of the warp-directional strip 1, for example, laterally, the adhering is made in the same process as described above.

Although the present specification and drawings have been exemplified and described as separately performing the vibration fusion for the first contact point C₁ and the second contact point C₂, but it will be understood that various modifications may be applied. For example, the first contact point C₁ and the second contact point C₂ may also be adhered using a single fusion machine, and in this case, first, the first contact point C₁ is wound on the winder and adhered, and then released again to be added to the fusion machine. At this time, when the array is turned over and the upper and lower surfaces are inverted, the adhering of the second contact point C₂ may be performed. Furthermore, it goes without saying that the contact points of the polymer strip may be adhered to each other by ultrasonic friction melt adhering or hot melt adhering instead of the vibration melt adhering.

The geogrid, which has been adhered as described above, is wound on the winder 71 to a predetermined length through the winding means 70. Preferably, for the convenience of handling in the field, the length of a product of the fiber-reinforced geogrid is suitably 25 to 200 m.

Although, in the specification, the manufacture of the fiber reinforced polymer strip and the manufacture of the geogrid have been described separately, all of these processes may be performed continuously, of course.

### [Modes for the Invention]

Hereinafter, the present invention will be described in detail with reference to Examples for specific description. However, Examples according to the present invention may be modified in various forms, and it is not interpreted that the scope of the present invention is limited to the following Examples. Examples of the present invention will be provided for more completely explaining the present invention to those skilled in the art.

The physical properties of a geogrid according to the following Examples were evaluated according to the criteria to be described below.

### Wide tensile strength test: ASTM D 4595

A sample with a width of 20 cm was fixed between clamps attached to the top and bottom of a strain-controlled tensile tester and then stretched at a rate of 10 ± 3%/min to measure the tensile strength and tensile elongation at breakage due to tensile strain. In the case of using glass fiber as a reinforcing fiber, the tensile strength (LASE2%) when the tensile strain was 2% was separately shown, and in the case of using high-strength polyester yarn as the reinforcing fiber, the tensile strength (LASE5%) when the tensile strain was 5% was separately shown.

### Creep test: ASTM D 5262

A creep test was to determine a tensile strength reduction coefficient due to a creep, which was considered in design by evaluating the strain behavior of the geogrid when a continuous tensile load was applied under a constant temperature condition (21 ± 2°C). In this experiment, a load of 45% compared to the maximum tensile strength of a geogrid sample was applied to the sample, and the tensile strain after 1,000 hours was measured.

### Evaluation of construction resistance: ASTM D 5818

After a basic roadbed was treated in the same manner as when an actual structure was built, a geogrid sample of at least 10 m² was laid, a fill material was laid on the top thereof, and then compacted in the same manner as when the actual structure was built. Aggregate with a maximum size of 20 mm were compacted at a thickness of 30 cm as the filling material, and the geogrid sample was laid, and the same fill material was laid on the top thereof at a thickness of 30 cm and reciprocating-compacted 4 times with a 10t capacity of vibrating roller.

After the compaction was completed, the compacted aggregate was removed so as not to damage the geogrid, the geogrid sample was extracted, a tensile test was performed on the extracted sample, and the strength reduction rate (%) was calculated by comparing the tensile strength with the tensile strength of a raw material.

### Shape stability test

In the same method as the evaluation of the construction resistance, after filling, laying, and compacting, a sample was extracted and contact regions between warp-directional strips and weft-directional strips were observed, and then if the number of separated contacts was 20% or more, it was 'poor', if 10 to 20%, it was 'normal', and if less than 10%, it was evaluated as 'excellent'.

### Evaluation of pulling test: GRI-GG5

A soil box having a length of 140 cm, a width of 60 cm, and a height of 60 cm was filled with soil and simultaneously, a geogrid was laid between the soils. At this time, the geogrid sample was connected to a pulling device through a slit of 2.5 cm. In addition, a rubber membrane was installed on the top of the soil box to press a uniform vertical in the soil box by air pressure. Next, when the vertical load was changed from 0.3 to maximum 1.2 kg/cm², a pulling displacement rate was set to 0.1 cm/min, and the maximum pulling force was applied, the pulling displacement of the material was analyzed and then an interaction coefficient (Ci) indicating friction force between the geogrid and the soil was evaluated.

### Peeling strength

A warp strip with a length of 30 cm was prepared, a weft strip was fixed using a jig as shown in the drawing, and then a warp strip was fixed to an upper jig, and lengths at which the fibers were discharged were measured using the upper jig at a speed of 50 cm/min.

### Example 1

48 high-strength polyester yarns with a fineness of 1000 denier were divided into three equal parts and passed through a three-hole circular cross-sectional nipple and a quadrangular die to prepare a warp-directional fiber reinforced polymer strip having a cross section illustrated in (c) of FIG. 11B and having a width of 8.4 mm and a thickness of 2.3 mm. In addition, 15 high-strength polyester yarns with a fineness of 1000 denier was used to prepare a weft-directional fiber reinforced polymer strip having the same cross section as that of the warp-directional fiber-reinforced polymer strip and having a width of 6.3 mm and a thickness of 1.5 mm.

At this time, by using an adhesive powder supplier, a polyester-based adhesive powder was supplied to the surface of the reinforcing material fiber of each of the warp-directional and weft-directional fiber reinforced polymer strips to be 1.5 wt% of the weight of the strip. The adhesive powder had a softening point of 120°C, Tg 65 (°C), a melt flow index MI of 16 (g/10 min), a particle size of 350 (µm), and a hardness of 80 (Shore D).

Polypropylene having a melt index of 4 was used as a thermoplastic polymer resin. Next, the warp-directional strips manufactured in the strip arrangement device were arranged in the strip arrangement device so that a product width of the geogrid was 4 m and a distance between the strip centers was 40 mm, and then weft-directional strips were inserted at intervals of 40 mm to form 90° with the warp-directional strips to form a textile structure lattice as illustrated in FIG. 1. Subsequently, in a first adhering device, contact points formed by placing the warp-directional strips on the weft-directional strips were vibration-fused with a frequency of 194 Hz and an amplitude of 1.3 mm, and then transferred to a second adhering device, and then contact points formed by placing the warp-directional strips below the weft-directional strips were vibration-fused with a frequency of 194 Hz and an amplitude of 1.3 mm to manufacture a geogrid. In the manufactured geogrid, the number of ribs per unit length (ribs/m), wide tensile strength (kN/m), LASE5% (kN/m), tensile strain (%), creep strain (%), and strength reduction rate during construction (%) were shown in Table 1, and an interaction coefficient and shape stability during pulling were shown in Table 2.

### Example 2

Two high-strength polyester yarns having a fineness of 24000 denier passed through a nipple with a 2-hole quadrangular cross section and a quadrangular die to prepare a warp-directional fiber reinforced polymer strip having a cross section illustrated in (b) of FIG. 11A and with a width of 8.4 mm and a thickness of 2.3 mm.

At this time, by using an adhesive powder supplier, a polyester-based adhesive powder was supplied to the surface of the reinforcing material fiber of each of the warp-directional and weft-directional fiber reinforced polymer strips to be 1.5 wt% of the weight of the strip. The adhesive powder had a softening point of 120°C, Tg 65 (°C), a melt flow index MI of 16 (g/10 min), a particle size of 350 (µm), and a hardness of 80 (Shore D).

In addition, 2 high-strength polyester yarns with a fineness of 7500 denier were used to prepare a weft-directional fiber reinforced polymer strip having the same cross section as that of the warp-directional fiber-reinforced polymer strip and having a width of 6.3 mm and a thickness of 1.5 mm. Subsequently, a geogrid was manufactured by arranging and adhering the strips in the same manner as in Example 1. In the manufactured geogrid, the number of ribs per unit length (ribs/m), wide tensile strength (kN/m), LASE5% (kN/m), tensile strain (%), creep strain (%), and strength reduction rate during construction (%) were shown in Table 1.

### Comparative Example 1

When the weft-directional fiber reinforced polymer strip was prepared, the polyester-based adhesive powder was not supplied to the surface of the reinforcing material, and the remaining conditions were the same as in Example 1.

### Comparative Example 2

When the warp-directional fiber reinforced polymer strip was prepared, the polyester-based adhesive powder was not supplied to the surface of the reinforcing material, and the remaining conditions were the same as in Example 1.

### Comparative Example 3

When the weft-directional and warp-directional fiber reinforced polymer strips were prepared, the polyester-based adhesive powder was not supplied to the surface of the reinforcing material, and the remaining conditions were the same as in Example 1.

**[Table 1]**

| Classificatio n | Physical property | | | | | Civil engineering performance |
|---|---|---|---|---|---|---|
| | Warp direction | | | | Weft direction | |
| | Number of ribs (nbs/m) | Break strength (kN/m) | LASE5% (kN/m) | Tensile strain (%) | Wide tensile strength (kN/m) | Peeling strengh (kN/m) |
| Example 1 | 25 | 108 | 65 | 10.5 | 25 | 4.2 |
| Example 2 | 25 | 107 | 64 | 10.9 | 25 | 4.3 |
| Comparativ e Example 1 | 25 | 107 | 59 | 10.8 | 25 | 4.4 |
| Comparativ e Example 2 | 25 | 102 | 58 | 10.2 | 25 | 4.5 |
| Comparativ e Example 3 | 25 | 102 | 58 | 10.1 | 25 | 4.7 |

**[Table 2]**

| | Shape stability | Interaction coefficient (Ci) |
|---|---|---|
| Example 1 | Excellent | 0.96 |
| Comparative Example 3 | Poor | 0.64 |

When comparing the physical properties of the geogrids of Examples and Comparative Examples with reference to Tables 1 and 2, the following differences were shown.

The geogrids of Examples 1 and 2 and the geogrids of Comparative Examples 1 to 3 had similar values to each other in wide tensile strength (kN/m), LASE5% (kN/m), tensile strain (%), creep strain (%), and strength reduction rate (%), but the textile geogrids of Examples had a larger value in peeling strength than the geogrids of Comparative Examples. The peeling strength is a value obtained by measuring a free length required when connected to a front block during construction, and the higher the peeling strength, the shorter the required free length, so that economical construction is enabled. In addition, as a result of comparing interaction coefficients (Ci) between the soil and the reinforcing material (Table 2), the interaction coefficient (Ci) of the geogrid of Example 1 was 0.96, and in the case of Comparative Example 3, the interaction coefficient (Ci) was 0.84.

That is, the interaction coefficient of the geogrid according to Example 1 was higher than that of the geogrid of Comparative Example 3. In this regard, the interaction coefficient when the geogrid was pulled out was affected by the shape of the geogrid, and among the geogrid shapes, the interaction coefficient was affected by a passive resistance member, that is, a member placed in a vertical direction to a direction in which the pulling force was applied. In an experiment for a geogrid having the same width (60 cm), the geogrid of Comparative Example 3 had a strip length of 60 cm placed in the vertical direction to the direction in which the pulling force was applied. However, in the geogrid of Example 1, a curvature occurred in the strip due to a vertically alternating arrangement, so that the actual length of the strip placed in the vertical direction to the direction in which the pulling force was applied was longer than 60 cm. Therefore, as compared to the geogrid of Comparative Example 3, the passive resistance member of the geogrid of the present invention had a large contact area with the soil, and thus a more excellent reinforcing function may be exhibited.

## Claims

1. A durability-enhanced fiber reinforced polymer strip (1, 2) comprising:
an aggregate of a plurality of fibers (100) as a reinforcing material;
a thermoplastic polymer resin (110) as a coating material, **characterized in that** further comprises:
an adhesive using an adhesive powder on the reinforcing material's (100) surface under said thermoplastic polymer resin (110), said adhesive has a particle size of 50 to 1,500 µm and being a heat-melting adhesive that is solidified and adhered when cooled after applied and adhered to the surface of said aggregate of a plurality of fibers (100); wherein
said durability enhanced fiber reinforced polymer strip (1, 2) has a quadrangular shape having a width between 2 to 30 mm and a thickness between 1 to 10 mm or having a circular cross section with a diameter between 2 to 20 mm.

2. The durability-enhanced fiber reinforced polymer strip of claim 1, wherein the aggregate of fibers (100) is independently one kind of fiber selected from the group consisting of polyester fiber, glass fiber, aramid fiber, carbon fiber, basalt fiber, stainless steel fiber, copper fiber, and amorphous metal fiber or combined fibers combined with two kinds or more of fibers thereof.

3. The durability-enhanced fiber reinforced polymer strip of claim 1, wherein the thermoplastic polymer resin is independently polyolefin-based resins having a melt index (MI) of 1 to 35, and one kind of resin selected from the group consisting of polyethylene terephthalate, polyamides, polyacrylates, polyacrylonitrile, polycarbonates, polyvinylchloride, polystyrene, and polybutadiene or combined resins combined with two kinds or more of resins thereof having an intrinsic viscosity (IV) of 0.64 to 1.0.

4. The durability-enhanced fiber reinforced polymer strip of claim 1, wherein the adhesive powder is formed by powdering a low-melting copolymerized polyester resin in which dicarboxylic acid consisting of 60 to 90 mol% of terephthalic acid and 10 to 40 mol% of isophthalic acid and diol consisting of 60 to 100 mol% of ethylene glycol and 0 to 40 mol% of diethylene glycol are copolymerized, and
the adhesive powder has a glass transition temperature (Tg) of 50°C or more, the hardness (Shore D) of 80 or more, and a softening point of 80 to 140°C.

5. A lattice-shaped geogrid made of the durability-enhanced fiber reinforced polymer strip (1, 2) of any one of claims 1 to 4, **characterized in that** said fiber reinforced polymer strips (1, 2) are disposed in parallel at predetermined intervals in a plurality of warp directions and weft directions,
each of the warp-directional strips (1) includes at least one or more of first contact points (c1) formed by intersecting any one of the weft-directional strips (2) on the upper surface thereof and second contact points (c2) formed by intersecting the other one of the weft-directional strips (2) on the lower surface thereof, and
the contact points are fixed by fusing a thermoplastic polymer resin of the warp-directional strip (1) and a thermoplastic polymer resin of the weft-directional strip (2) to each other in a contact point area (c1 or c2).

6. The lattice-shaped geogrid of claim 5, wherein the intervals between the parallel strips (1,2) are between 10 to 100 mm.

## Patentansprüche

1. Ein haltbarkeitsverbesserter faserverstärkter Polymerstreifen (1, 2), umfassend:
ein Aggregat aus einer Vielzahl von Fasern (100) als Verstärkungsmaterial;
ein thermoplastisches Polymerharz (110) als Beschichtungsmaterial, **dadurch gekennzeichnet, dass** es außerdem umfasst:
einen Klebstoff unter Verwendung eines Klebstoffpulvers auf der Oberfläche des Verstärkungsmaterials (100) unter dem thermoplastischen Polymerharz (110), wobei der Klebstoff eine Teilchengröße von 50 bis 1500 µm aufweist und ein wärmeschmelzender Klebstoff ist, der sich verfestigt und anhaftet, wenn er abgekühlt ist, nachdem er auf die Oberfläche des Aggregats aus einer Vielzahl von Fasern (100) aufgetragen und angehaftet wurde; wobei
der haltbarkeitsverbesserte faserverstärkte Polymerstreifen (1, 2) eine viereckige Form mit einer Breite zwischen 2 und 30 mm und einer Dicke zwischen 1 und 10 mm oder einen kreisförmigen Querschnitt mit einem Durchmesser zwischen 2 und 20 mm aufweist.

2. Der haltbarkeitsverbesserte faserverstärkte Polymerstreifen nach Anspruch 1, wobei das Faseraggregat (100) unabhängig eine Art von Faser ist, die aus der Gruppe ausgewählt ist, die aus Polyesterfaser, Glasfaser, Aramidfaser, Kohlenstofffaser, Basaltfaser, rostfreie Stahlfaser, Kupferfaser und amorphe Metallfaser oder kombinierten Fasern, die mit zwei oder mehr Arten von Fasern davon kombiniert sind, besteht.

3. Der haltbarkeitsverbesserte faserverstärkte Polymerstreifen nach Anspruch 1, wobei das thermoplastische Polymerharz unabhängig ein Harz auf Polyolefinbasis mit einem Schmelzindex (MI) von 1 bis 35 ist und eine Art von Harz ist, das aus der Gruppe ausgewählt ist, die aus Polyethylenterephthalat, Polyamiden, Polyacrylaten, Polyacrylnitril, Polycarbonaten, Polyvinylchlorid, Polystyrol und Polybutadien oder kombinierten Harzen, die mit zwei oder mehr Arten von Harzen davon kombiniert sind, besteht, und das eine intrinsische Viskosität (IV) von 0,64 bis 1,0 aufweist.

4. Der haltbarkeitsverbesserte faserverstärkte Polymerstreifen nach Anspruch 1, wobei das Klebstoffpulver durch Pulverisieren eines niedrigschmelzenden copolymerisierten Polyesterharzes gebildet wird, in dem Dicarbonsäure, die aus 60 bis 90 Mol-% Terephthalsäure und 10 bis 40 Mol-% Isophthalsäure besteht, und Diol, das aus 60 bis 100 Mol-% Ethylenglykol und 0 bis 40 Mol-% Diethylenglykol besteht, copolymerisiert werden, und
das Klebstoffpulver eine Glasübergangstemperatur (Tg) von 50° C oder mehr, eine Härte (Shore D) von 80 oder mehr und einen Erweichungspunkt von 80 bis 140° C aufweist.

5. Ein gitterförmiges Geogitter, das aus dem haltbarkeitsverbesserten faserverstärkten Polymerstreifen (1, 2) nach einem der Ansprüche 1 bis 4 gemacht ist, **dadurch gekennzeichnet, dass** die faserverstärkten Polymerstreifen (1, 2) parallel in vorbestimmten Abständen in einer Vielzahl von Kettrichtungen und Schussrichtungen angeordnet sind,
jeder der in Kettrichtung verlaufenden Streifen (1) mindestens einen oder mehrere erste Kontaktpunkte (c1), die durch Überschneiden eines der in Schussrichtung verlaufenden Streifen (2) auf dessen Oberseite gebildet werden, und zweite Kontaktpunkte (c2), die durch Überschneiden des anderen der in Schussrichtung verlaufenden Streifen (2) auf dessen Unterseite gebildet werden, aufweist, und
die Kontaktpunkte fixiert sind durch Verschmelzen eines thermoplastischen Polymerharzes des in Kettrichtung verlaufenden Streifens (1) und eines thermoplastischen Polymerharzes des in Schussrichtung verlaufenden Streifens (2) miteinander in einem Kontaktpunktbereich (c1 oder c2).

6. Das gitterförmiges Geogitter nach Anspruch 5, wobei die Abstände zwischen den parallelen Streifen (1, 2) zwischen 10 und 100 mm betragen.

## Revendications

1. Bande de polymère renforcée de fibres à durabilité améliorée (1, 2) comprenant :
un agrégat d'une pluralité de fibres (100) comme matériau de renforcement ;
une résine polymère thermoplastique (110) comme matériau de revêtement, **caractérisée en ce qu'**elle comprend en outre :
un adhésif utilisant une poudre adhésive sur la surface du matériau de renforcement (100) sous ladite résine polymère thermoplastique (110), ledit adhésif ayant une taille de particule de 50 à 1 500 µm et étant un adhésif thermofusible qui se solidifie et adhère lorsqu'il est refroidi après avoir été appliqué et adhéré à la surface dudit agrégat d'une pluralité de fibres (100) ; dans laquelle
ladite bande (1, 2) de polymère renforcé de fibres à durabilité améliorée a une forme quadrangulaire d'une largeur comprise entre 2 et 30 mm et d'une épaisseur comprise entre 1 et 10 mm ou une section transversale circulaire d'un diamètre compris entre 2 et 20 mm.

2. Bande de polymère renforcée de fibres à durabilité améliorée selon la revendication 1, dans laquelle l'agrégat de fibres (100) est indépendamment un type de fibre choisi dans le groupe composé de : fibre de polyester, fibre de verre, fibre d'aramide, fibre de carbone, fibre de basalte, fibre d'acier inoxydable, fibre de cuivre, et fibre de métal amorphe ou des fibres combinées avec deux types ou plus de fibres de ceux-ci.

3. Bande de polymère renforcée de fibres à durabilité améliorée selon la revendication 1, dans laquelle la résine polymère thermoplastique est indépendamment des résines à base de polyoléfine ayant un indice de fusion (MI) de 1 à 35, et un type de résine choisi dans le groupe constitué du polyéthylène téréphtalate, des polyamides, des polyacrylates, du polyacrylonitrile, des polycarbonates, du polychlorure de vinyle, du polystyrène et du polybutadiène, ou des résines combinées avec deux types ou plus de résines ayant une viscosité intrinsèque (IV) de 0,64 à 1,0.

4. Bande de polymère renforcée de fibres à durabilité améliorée selon la revendication 1, dans laquelle la poudre adhésive est formée par le poudrage d'une résine polyester copolymérisée à faible point de fusion dans laquelle sont copolymérisés un acide dicarboxylique composé de 60 à 90 % en moles d'acide téréphtalique et de 10 à 40 % en moles d'acide isophtalique, et un diol composé de 60 à 100 % en moles d'éthylène glycol et de 0 à 40 % en moles de diéthylène glycol, et
la poudre adhésive a une température de transition vitreuse (Tg) de 50°C ou plus, une dureté (Shore D) de 80 ou plus, et un point de ramollissement de 80 à 140°C.

5. Géogrille en forme de treillis constituée d'une bande (1, 2) de polymère renforcé de fibres à durabilité améliorée selon l'une quelconque des revendications 1 à 4, **caractérisée en ce que** lesdites bandes (1, 2) de polymère renforcé de fibres sont disposées parallèlement à des intervalles prédéterminés dans une pluralité de sens de chaînes et de sens de trames,
chacune des bandes directionnelles de chaînes (1) comprend au moins un ou plusieurs des premiers points de contact (c1) formés par l'intersection de l'une quelconque des bandes directionnelles de trames (2) sur sa surface supérieure et des seconds points de contact (c2) formés par l'intersection de l'autre bande directionnelle de trame (2) sur sa surface inférieure, et
les points de contact sont fixés par fusion d'une résine polymère thermoplastique de la bande de chaîne (1) et d'une résine polymère thermoplastique de la bande de trame (2) l'une sur l'autre dans une zone de point de contact (c1 ou c2).

6. Géogrille en forme de treillis selon la revendication 5, dans laquelle les intervalles entre les bandes parallèles (1, 2) sont compris entre 10 et 100 mm.
